# EUROPÄISCHE PATENTSCHRIFT

(11) **EP 0 938 663 B1**
(45) Veröffentlichungstag und Bekanntmachung des Hinweises auf die Patenterteilung: **15.03.2006**
(21) Anmeldenummer: 97951889.1
(22) Anmeldetag: 12.11.1997
(51) Int. Cl.: G01N 21/88

(54) **VERFAHREN ZUM TESTEN DER ZUVERLÄSSIGKEIT EINES PRÜFGERÄTES, INSBESONDERE EINES LEERFLASCHENINSPEKTORS**
METHOD FOR TESTING THE RELIABILITY OF A TESTING APPARATUS, SPECIALLY AN EMPTY BOTTLE INSPECTING DEVICE
PROCEDE POUR TESTER LA FIABILITE D'UN APPAREIL DE CONTROLE, EN PARTICULIER D'UN SYSTEME DE CONTROLE D'UNE BOUTEILLE VIDE

(30) Priorität: 12.11.1996 DE 19646678
(43) Veröffentlichungstag der Anmeldung: 01.09.1999
(73) Patentinhaber: HEUFT SYSTEMTECHNIK GMBH, 56659 Burgbrohl (DE)
(72) Erfinder: HEUFT, Bernhard, D-56659 Burgbrohl (DE)
(74) Vertreter: Gritschneder, Martin
(86) Internationale Anmeldenummer: PCT/EP1997/006310
(87) Internationale Veröffentlichungsnummer: WO 1998/021567

(56) Entgegenhaltungen:
- EP-A- 0 382 466
- DE-A- 3 938 471
- PATENT ABSTRACTS OF JAPAN vol. 15, no. 449 (P-1275), 14.November 1991 & JP 03 188308 A (FUJITSU LTD), 16.August 1991,
- G.A.W. WEST ET AL.: "Image processing and understanding for automatic inspection" TRANSACTIONS OF THE INSTITUTE OF MEASUREMENT AND CONTROL., Bd. 10, 1988, Seiten 265-272, XP000098654

## Beschreibung

Die Erfindung betrifft ein Verfahren zum Testen der Zuverlässigkeit eines Prüfgerätes, das eine Vielzahl gleichartiger Gegenstände auf ein Merkmal hin überprüft, indem für jeden Gegenstand ein Merkmalsignal erzeugt und das Merkmalsignal auf die Erfüllung einer ersten Bedingung hin überprüft wird, wobei zum Testen der Zuverlässigkeit des Prüfgerätes aus den Merkmalsignalen mehrerer der gleichartigen Gegenstände ein Testsignal abgeleitet wird und das Testsignal auf die Erfüllung einer zweiten Bedingung hin überprüft wird, wozu das Testsignal mit einem Referenzwert verglichen wird.

Daß ein Merkmalsignal dabei einer ersten Bedingung genügt, kann bedeuten, daß das Merkmalsignal über oder unter einem Schwellwert für dieses Merkmal liegt oder innerhalb eines durch einen oberen und einen unteren Grenzwert gebildeten Bereiches liegt.

Nach dem Stand der Technik werden Zuverlässigkeitstests für Prüfgeräte, z.B. solche für leere Getränkeflaschen, sog. Leerflascheninspektoren, in der Weise durchgeführt, daß eine Reihe von Testflaschen präpariert werden, so dass sie entsprechend der Spezifikation der Fehlererkennung jeweils einen bestimmten Fehler beinhalten, d.h. ein bestimmtes Merkmal nicht erfüllen. Für jedes überprüfte Merkmal wird dabei eine besondere Testflasche präpariert. Der Satz von Testflaschen wird dann in bestimmten Zeitabständen, z. B. jede halbe Stunde, oder nach einer bestimmten Anzahl von Flaschen, z.B. 50.000 Flaschen, in den Flaschenstrom eingereiht. Dies kann von Hand oder automatisch erfolgen. Die Testflaschen sind dabei so markiert, daß sie sofort als Testflaschen erkennbar sind. Der Zuverlässigkeitstest besteht darin, daß überprüft wird, ob diese Testflaschen von dem Prüfgerät, also beispielsweise dem Leerflascheninspektor, als fehlerhaft erkannt werden. Bei dem bisher praktizierten Verfahren ist die zweite Bedingung somit komplementär zu der ersten Bedingung, d. h. bei den Testflaschen ist die zweite Bedingung dann erfüllt, wenn das Prüfgerät erkennt, daß die Testflasche fehlerhaft ist, daß die erste Bedingung also nicht erfüllt ist. In dem Prüfgerät wird darüber ein Protokoll geführt. Bei Fehlschlagen des Zuverlässigkeitstests, d.h. wenn eine oder mehrere der Testflaschen nicht als fehlerhaft erkannt werden, muss der Test wiederholt werden. Damit soll die Betriebssicherheit, d. h. die Zuverlässigkeit, eines Prüfgerätes hergestellt werden. Dieser Zuverlässigkeitstest ist unbefriedigend, da mit ihm erst nachträglich erkannt wird, dass ein Prüfgerät nicht mehr zuverlässig gearbeitet hat. Die Gründe für das Versagen eines Prüfgerätes sind dabei üblicherweise ein Verschmutzen der Optik oder ein Versagen einzelner Komponenten der Erkennungselektronik.

Bei der Prüfung der Zuverlässigkeit beispielsweise eines Leerflascheninspektors müssen dazu eine große Anzahl von Testflaschen verwendet werden, wobei jede Testflasche einen einzigen Fehler, z. B ein defektes Verschlussgewinde oder eine Verunreinigung in einer einzigen Erkennungszone aufwies. Für jede Fehlerart und für jede Erkennungszone war dabei eine eigene besonders präparierte Testflasche erforderlich. Hätte eine Testflasche mehrere Fehler aufgewiesen, so wäre aus dem Umstand, daß diese Testflasche ausgeleitet wird, nicht sichergestellt gewesen, daß alle Fehler erkannt wurden. Ein Testflaschenset besteht daher z. B. aus etwa 10 bis 15 Flaschen.

Aus US-A-4,691,231 ist es bekannt, die Zuverlässigkeit eines Prüfgerätes, nämlich eines Leerflascheninspektors, dadurch zu testen, daß kontinuierlich die Fehlerrate überwacht wird und beim Auftreten einer ungewöhnlichen Fehlerrate ein Alarm- oder Stoppsignal erzeugt wird. Bei Mehrweg-Flaschen wird als Beispiel ein Über- bzw. Unterschreiten einer Fehlerquote von 5 bis 1 % als eine solche ungewöhnliche Ausschussrate angegeben. Diese Druckschrift wird als nächstes Stand der Technik angegeben.

Der Erfindung liegt die Aufgabe zugrunde, ein Verfahren zu schaffen, mit dem eine Verschlechterung im Betriebsverhalten eines Prüfgerätes möglichst früh erkannt werden kann.

Erfindungsgemäß wird diese Aufgabe bei einem Verfahren der eingangs genannten Art dadurch gelöst, daß der Referenzwert der bei fehlerfreien Gegenständen zu erwartende Wert ist.

Dem erfindungsgemäßen Verfahren liegt dabei der Gedanke zugrunde, die von den einzelnen Gegenständen abgeleiteten Merkmalsignale über einen längeren Zeitraum zu beobachten und aus den Merkmalsignalen einer größeren Anzahl von geprüften Gegenständen eine Aussage über die Zuverlässigkeit der Arbeitsweise des Prüfgerätes zu treffen. Zeigt sich z. B., daß die Merkmalsignale eine Tendenz zu höheren oder niedrigeren Werten als dem bei fehlerfreien Gegenständen zu erwartenden Wert, haben, so kann dies als Anzeichen dafür gewertet werden, daß das Prüfgerät nicht ordnungsgemäß arbeitet.

Das Testsignal kann der Mittelwert der Merkmalsignale mehrerer Gegenstände sein. Dadurch, daß normalerweise eine sehr große Anzahl von Gegenständen innerhalb kurzer Zeit das Prüfgerät passiert, läßt sich ein Mittelwert mit geringer Streuungsbreite ermitteln, so daß einzelne als fehlerhaft erkannte Gegenstände nicht ins Gewicht fallen. Vorzugsweise werden ferner bei der Mittelwertbildung diejenigen Gegenstände nicht berücksichtigt, bei denen das Merkmalsignal die erste Bedingung nicht erfüllt hat, die also als fehlerhaft erkannt wurden. Die zulässige Abweichung des Testsignals von dem bei fehlerfreien Gegenständen zu erwartenden Wert, dem Referenzwert, nach oben oder unten kann dabei kleiner sein als die Abweichung, die für einen einzelnen Gegenstand noch akzeptabel ist, d. h. bei der die erste Bedingung noch erfüllt ist.

Das Einstellen der Referenzwerte für ein Prüfgerät kann von Hand, z. B. über eine Tastatur, erfolgen oder mittels fehlerfreier Gegenstände, indem die Gegenstand durch das Prüfgerät geschickt werden und der Mittelwert der dabei festgestellten Merkmalsignale als Referenzwert gespeichert wird. Mittels weiterer Durchläufe der Gegenstände durch das Prüfgerät kann auch die prozentuale Reproduzierbarkeit des Referenzwertes ermittelt werden und dadurch die maximal zulässige Abweichung des Testsignals nach oben oder unten von dem Referenzwert festgelegt werden, bei der die zweite Bedingung noch als erfüllt angesehen wird.

Das erfindungsgemäße Verfahren ist insbesondere in der Lebensmittelindustrie von Bedeutung, da es hier besonders wichtig ist, daß Prüfgeräte fehlerfrei arbeiten und daß ein Absinken der Zuverlässigkeit eines Prüfgerätes bereits erkannt wird, bevor fehlerhafte Behälter, z.B. Leerflaschen mit Fremdkörper, wie Schmutz oder Cellophanfolien, mit Absplitterungen am Öffnungsrand oder mit Laugenreste, unerkannt die Prüfgeräte passieren. Bei gefüllten Behältern darf der Innendruck nicht zu hoch und nicht zu niedrig ist. Konservendosen müssen sich vor dem Einfüllen in einem einwandfreien Zustand befinden und müssen nach dem Befüllen einwandfrei verschlossen sein.

Leerflascheninspektoren arbeiten bei der Überprüfung auf die Abwesenheit von Fremdkörpern häufig in der Weise, daß z.B. mittels einer CCD-Kamera eine Abbildung der Gegenstände punktweise abgetastet wird, und zwar im allgemeinen in zwei zueinander rechtwinkligen Richtungen, und die Helligkeit jedes Bildpunktes ermittelt und durch Vergleich mit der Helligkeit von benachbarten Bildpunkten Hell-Dunkel- und Dunkel-Hell-Übergänge festgestellt werden. Ein solcher Übergang tritt z.B. immer dann auf, wenn die Abtastung den Rand eines Fremdkörpers in einer Leerflasche überstreicht. Auch Leerflaschen, die von Fremdkörpern frei sind haben dabei aufgrund von Unebenheiten in der Behälterwand oder der Riffelung am Rand des Bodens eine gewisse Anzahl von Helligkeitsübergängen, z.B. bis zu 100 Helligkeitsübergänge. Ein einzelner Gegenstand gilt in diesem Fall bis zu 100 Helligkeitsübergängen als frei von Fremdkörpern, d.h. ein Merkmalsignal von 100 genügt noch der ersten Bedingung.

Bei einer ordnungsgemäßen Arbeitsweise z.B. eines Leerflascheninspektors wird für die überwiegende Mehrzahl der Leerflaschen, z.B. 90%, ein Merkmalsignal erhalten, das etwas unter der Anzahl von 100 Hell-Dunkel-Übergängen liegt. Sackt die Empfindlichkeit der Erkennungseinrichtung des Prüfgerätes wegen Verschmutzung oder wegen anderer Gründe ab, so führt dies tendenziell zu einem Rückgang der Anzahl der pro Leerflasche erkannten Hell-Dunkel-Übergänge. Jenachdem wie groß die Abweichung vom Referenzwert ist, können unterschiedliche Maßnahmen veranlaßt werden. Bei einer Abweichung von 10% kann z.B. lediglich ein Warnsignal ausgegeben werden, während bei einer Abweichung von 20% oder mehr das Prüfgerät und die gesamte Transporteinrichtung stillgesetzt werden.

Eine besonders vorteilhafte Ausgestaltung des erfindungsgemäßen Verfahrens ergibt sich in Verbindung mit Fehlererkennungsmethoden, bei denen nicht nur die Anzahl der Hell-Dunkel-Übergänge gezählt werden, sondern auch noch der Hell-Dunkel-Kontrast der Helligkeitsübergänge festgestellt wird. Die gefundenen, vom Hintergrund abweichenden Bildelemente werden dabei z.B. in acht verschiedenen Helligkeitsklassen eingeteilt oder die Hell-Dunkel-Übergänge werden z.B. in acht verschiedene Kontrastgruppen eingeteilt, wobei erst nach dieser Klassifizierung die Anzahl der Hell-Dunkel-Übergänge gezählt wird und innerhalb jeder Klasse mit einem speziellen Schwellwert verglichen wird. Bei einer Verschmutzung der Erkennungseinrichtung des Prüfgerätes tritt eine Lichtstreuung auf den Linsen oder Glasschutzscheiben auf, was zu einer Verringerung des Hell-Dunkel-Kontrastes führt, da sich durch die Lichtstreuung ein nebelartiger Unschärfeeffekt über das von der Erkennungseinrichtung abgetastete Bild legt. Durch die Verringerung des Hell-Dunkel-Kontrastes ergibt sich eine Verschiebung der Hell-Dunkel-Übergänge innerhalb der Kontrastklassen, und zwar in der Weise, daß die Merkmalsignale häufiger in die Klassen mit geringerem Kontrast fallen. Beim Testen der Zuverlässigkeit des Prüfgerätes braucht man sich jetzt nicht nur auf den Vergleich der Anzahl von Hell-Dunkel-Übergängen zu verlassen, sondern in jeder der Kontrastklassen findet ein Vergleich mit einem Schwellwert statt und zusätzlich kann die Verteilung der Merkmalsignale auf die einzelnen Kontrastklassen berücksichtigt werden.

Angenommen eine fehlerfreie Leerflasche hat 100 Hell-Dunkel-Übergänge in der Größe von 250 Graustufen und man arbeitet mit zwei Kontrastklassen, wobei die erste Kontrastklasse Hell-Dunkel-Übergänge mit unter 180 Graustufen und die zweite Kontrastklasse Hell-Dunkel-Übergänge mit über 180 Graustufen enthält: Bei einer leichten Verschmutzung der Optik der Erkennungseinrichtung werden dann zwar immer noch 100 Hell-Dunkel-Übergänge festgestellt, allerdings mit verringertem Kontrast, z.B. nur noch 150 Graustufen. Das festgestellte Merkmalsignal lautet dann "100 Hell-Dunkel-Übergänge in der zweiten Kontrastklasse" und entspricht damit nicht dem Referenzwert, der lautet "100 Hell-Dunkel-Übergänge in der Kontrastklasse 1". Die Verschlechterung der Fehlererkennungsmöglichkeit durch die Erkennungseinrichtung macht sich somit durch eine Verschiebung der Hell-Dunkel-Übergänge von der Kontrastklasse 1 in die Kontrastklasse 2 bemerkbar. Durch diese Ausgestaltung des erfindungsgemäßen Verfahrens lassen sich auch Aussagen über die Zuverlässigkeit der Erkennung insbesondere kleiner Fehler oder Fehler in Form transparenter Fremdkörper treffen.

Bei dieser Ausführungsform des erfindungsgemäßen Verfahrens enthält das Merkmalsignal somit nicht nur Angaben über die Anzahl der Hell-Dunkel-Übergänge sondern auch Angaben über die Verteilung der Hell-Dunkel-Übergänge auf die verschiedenen Kontrastklassen. Entsprechende Angaben sind auch in dem Referenzwert enthalten. Dadurch wird eine besonders frühzeitige Erkennung des Nachlassens der Empfindlichkeit der Erkennungseinrichtung möglich. Eine Verschmutzung der Optik der Erkennungseinrichtung führt z.B. zunächst zu keiner Änderung der Anzahl der Hell-Dunkel-Übergänge, sehr wohl jedoch zu einer Änderung in der Verteilung der Hell-Dunkel-Übergänge auf die verschiedenen Kontrastklassen.

Leerflascheninspektoren überprüfen ferner die Rundheit der Öffnung von Leerflaschen. Dadurch sollen Leerflaschen, bei denen der Rand der Öffnung Absplitterungen aufweist, ausgeschieden werden. Hierzu wird ein Lichtstrahl auf die Öffnung gerichtet und wird mittels einer CCD-Kamera das sich aus der Reflexion dieses Strahls ergebende Bild ausgewertet. Die Bildauswertung umfaßt dabei eine äußere ringförmige Erkennungszone; die dem nach außen abfallenden Bereich der Mündung entspricht, sowie eine sich daran anschließende innere ringförmig Erkennungszone, die dem horizontalen Bereich der Mündung entspricht. Die Absplitterung führt in der äußeren Erkennungszone zu einer Verringerung der Anzahl der Hell-Dunkel-Übergänge, während sie in der inneren Erkennungszone zu einer Erhöhung der Anzahl der Hell-Dunkel-Übergänge führt.

Das Erkennungsverfahren, bei dem die Anzahl und gegebenenfalls der Kontrast der Hell-Dunkel-Übergänge ermittelt wird, eignet sich insbesondere zum Erkennen von Fremdkörpern in Leerflaschen und zum Erkennen von Absplitterungen an der Mündungsöffnung. Absorbierende Fremdkörper, z.B. Schmutz werden dabei nach der Hellfeld-Methode festgestellt, während transparente Fremdkörper, z.B. Folien, nach der Dunkelfeld-Methode ermittelt werden (EP-A-0 387 930). Die einzelnen Bereiche einer Leerflasche und insbesondere des Flaschenbodens werden dabei getrennt untersucht. Durch das erfindungsgemäße Verfahren kann die Zuverlässigkeit eines Prüfgerätes für jede Fehlerart und jede Erkennungszone getrennt getestet werden, da für jede Fehlerart und jede Erkennungszone ein eigener Referenzwert eingegeben oder eingelesen wird.

Mittels des erfindungsgemäßen Verfahrens kann auch die Zuverlässigkeit eines Prüfgerätes, das Laugenreste in Leerflaschen aufspürt, getestet werden. Laugen sind polare Flüssigkeiten, so daß sie hochfrequente elektrische Strahlung besser weiterleiten als Luft. Laugenreste können daher durch Ermitteln der Absorption hochfrequenter elektromagnetischer Strahlung erkannt werden. Das Merkmalsignal ist hierbei ein Maß für die geringere Absorption der elektromagnetischen Strahlung, die sie durch den Laugenrest erfährt. Übersteigt die Intensität der von einer Leerflasche durchgelassenen elektromagnetischen Strahlung einen Schwellwert, so ist die erste Bedingung nicht mehr erfüllt und die betreffende Leerflasche wird als fehlerhaft aus dem weiteren Produktionsablauf ausgeschieden. Der Referenzwert, der dem Prüfgerät eingegeben wird, entspricht einer Leerflasche ohne Laugenrest. Bei der Prüfung der Zuverlässigkeit des Restlaugen-Prüfgerätes muß das Testsignal mit geringen Abweichungen dem Referenzwert entsprechen. Zugleich ist die Restlaugenprüfung ein Beispiel dafür, daß das erfindungsgemäße Verfahren auch bei analogen Merkmalsignalen einsetzbar ist.

Ein weiteres Beispiel ist die Ermittlung von Flüssigkeitsresten am Flaschenboden durch Messung der dadurch erfolgenden Dämpfung von IR-Licht. Laugenreste in einer Leerflasche werden dabei sowohl in der vorausgehenden speziellen Überprüfung auf Laugenreste als auch bei der allgemeinen Ermittlung von Flüssigkeitsresten mittels IR-Dämpfung erkannt. Bestimmte Merkmale von Gegenständen können also auch auf zwei verschiedene Weisen geprüft werden.

Das erfindungsgemäße Verfahren ist zum Testen der Zuverlässigkeit von Prüfgeräten anwendbar, die mit unterschiedlichen Ausgangsgrößen als Merkmalsignal arbeiten. Beispiele sind Systeme zum Erkennen heller oder dunkler Pixel oder Systeme zur Auswertung von Helligkeitsverteilungen (Histogramme), die für sich betrachtet oder nach Auswertung über Rechenalgorithmen Kenngrößen für die Güte von Flaschen oder anderen Gegenständen darstellen.

Eine weitere Möglichkeit der Überprüfung der Zuverlässigkeit eines Prüfgerätes und insbesondere der Sauberkeit des optischen Erkennungssystems ergibt sich bei der Überprüfung des Wandkontrastes bei der Seitenwanderkennung. Hierbei wird der Kontrastunterschied, d.h. der Helligkeitsunterschied des Flaschenrandes, der wegen der starken Brechung der ihn durchdringenden Lichtstrahlen, schwarz erscheint, im Verhältnis zur Hintergrundbeleuchtung oder zur Helligkeit der Flaschenmitte ermittelt. Abweichungen des Mittelwertes dieses Helligkeitsunterschiedes ermöglichen sehr frühzeitig eine Aussage über eine Verschlechterung der Erkennungsleistung und damit der Zuverlässigkeit des Prüfgerätes.

Mittels der vorausgehend beschriebenen Ausführungsformen des erfindungsgemäßen Verfahrens läßt sich in einem bestimmten Bereich die Empfindlichkeit des Prüfgerätes auch automatisch nachführen. Bei Überschreitung bestimmter Grenzwerte wird dann ein Warnsignal abgegeben und bei Überschreiten eines weiteren Grenzwertes kann das Prüfgerät dann stillgestellt werden, weil eine sichere Erkennung bestimmter Fehler nicht mehr gegeben ist.

## Patentansprüche

1. Verfahren zum Testen der Zuverlässigkeit eines Prüfgerätes, das eine Vielzahl gleichartiger Gegenstände auf ein Merkmal hin überprüft, indem für jeden Gegenstand ein Merkmalsignal erzeugt und das Merkmalsignal auf die Erfüllung einer ersten Bedingung hin überprüft wird, wobei zum Testen der Zuverlässigkeit des Prüfgerätes aus den Merkmalsignalen mehrerer der gleichartigen Gegenstände ein Testsignal abgeleitet wird und das Testsignal auf die Erfüllung einer zweiten Bedingung hin überprüft wird, wozu das Testsignal mit einem Referenzwert verglichen wird, **dadurch gekennzeichnet, dass** der Referenzwert der bei fehlerfreien Gegenständen zu erwartende Wert ist.

2. Verfahren nach Anspruch 1, **dadurch gekennzeichnet, dass** das Testsignal der Mittelwert der Merkmalsignale mehrerer Gegenstände ist und dass die zulässige Abweichung des Testsignals von dem Referenzwert (zweite Bedingung) kleiner ist als die Abweichung, bei der für einen einzelnen Gegenstand die erste Bedingung erfüllt ist.

3. Verfahren nach Anspruch 2, **dadurch gekennzeichnet, dass** bei der Mittelwertbildung diejenigen Behälter nicht berücksichtigt werden, bei denen das Merkmalsignal die erste Bedingung nicht erfüllt.

4. Verfahren nach einem der Ansprüche 1 bis 3, wobei die Gegenstände Behälter aus transparentem Material sind, wobei das Prüfgerät zum Erkennen von Fremdkörpern in den Behältern dient und eine Lichtquelle und eine Erkennungseinrichtung aufweist, die Erkennungseinrichtung ein Bild des jeweiligen Behälters punktweise abtastet, die Helligkeit jedes Bildpunktes ermittelt und durch Vergleich der Helligkeit benachbarter Bildpunkte Hell-Dunkel- und Dunkel-Hell-Übergänge feststellt und die Anzahl der festgestellten Hell-Dunkel- und Dunkel-Hell-Übergänge als Kriterium für das Vorhandensein von Fremdkörpern und als Merkmalsignal verwendet wird, das mit einem Schwellwert verglichen wird, wobei die erste Bedingung darin besteht, dass das Merkmalsignal den Schwellwert nicht überschreitet, **dadurch gekennzeichnet, dass** das Testsignal der Mittelwert der Merkmalsignale mehrerer Gegenstände ist und dass die zweite Bedingung darin besteht, dass das Testsignal nur etwa 5 % von dem Referenzwert nach oben oder unten abweicht.

5. Verfahren nach Anspruch 4, **dadurch gekennzeichnet, dass** der Helligkeitsunterschied der einzelnen Hell-Dunkel- und Dunkel-Hell-Übergänge ermittelt wird, dass die ermittelten Hell-Dunkel- und Dunkel-Hell-Übergänge entsprechend dem ermittelten Helligkeitsunterschied in Kontrastklassen unterteilt werden, und dass die Verteilung der Hell-Dunkel- und Dunkel-Hell-Übergänge auf die Kontrastklassen in dem Merkmalsignal und dem Testsignal enthalten sind und dass bei der Prüfung der zweiten Bedingung diese Verteilung berücksichtigt wird.

6. Verfahren nach Anspruch 5, **dadurch gekennzeichnet, dass** die Empfindlichkeit der Erkennungseinrichtung entsprechend dem gemessenen Kontrast nachgeführt wird.

## Claims

1. Method for testing the reliability of a checking apparatus which checks multiple objects of the same type for a feature by generating a feature signal for each object and checking the feature signal for fulfilment of a first condition, wherein, in order to test the reliability of the checking apparatus, a test signal is derived from the feature signals of several objects of the same type and the test signal is checked for fulfilment of a second condition, for which purpose the test signal is compared with a refenece value, **characterized in that** the refernce value is the value to be expected for defect-free objects.

2. Method according to claim 1, **characterized in that** the test signal is the average of the feature signals of several objects and that the permitted deviation of the test signal from the reference value (second condition) is smaller than the deviation at which the first condition is fulfilled for an individual object.

3. Method according to claim 2, **characterized in that**, during averaging, those containers in which the feature signal does not fulfil the first condition are not taken into account.

4. Method according to one of claims 1 to 3, wherein the objects are containers made of transparent material, wherein the checking apparatus serves to recognize foreign bodies in the containers and has a light source and a recognition apparatus, the recognition apparatus scans an image of the relevant container pointwise, the brightness of each image point is determined and light-dark and dark-light transitions are established through the comparison of the brightness of neighbouring image points, and the number of established light-dark and dark-light transitions is used as a criterion for the presence of foreign bodies and as a feature signal which is compared with a threshold value, the first condition being that the feature signal does not exceed the threshold value, **characterized in that** the test signal is the average of the feature signals of several objects and that the second condition is that the test signal deviates upward or downward from the reference value by only roughly 5 %.

5. Method according to claim 4, **characterized in that** the brightness difference of the individual light-dark and dark-light transitions is established, that the established light-dark and dark-light transitions are divided into contrast classes according to the established brightness difference, and that the distribution of the light-dark and dark-light transitions over the contrast classes are contained in the feature signal and the test signal and that when the second condition is checked, this distribution is taken into account.

6. Method according claim 5, **characterized in that** the sensitivity of the recognition apparatus is tracked according to the contrast measured.

## Revendications

1. Procédé pour tester la fiabilité d'un appareil de contrôle qui contrôle une multitude d'objets de même type quant à une caractéristique donnée, un signal caractéristique étant émis pour chaque objet et ce signal caractéristique étant contrôlé quant à la conformité à une première condition, moyennant quoi, pour tester la fiabilité de l'appareil de contrôle, un signal test est déduit des signaux caractéristiques de plusieurs des objets de même type et ce signal test est contrôlé quant à la conformité à une seconde condition, le signal test étant comparé pour ce faire à une valeur de référence, **caractérisé en ce que** la valeur de référence est la valeur à escompter pour des objets exempts de défauts.

2. Procédé selon la revendication 1, **caractérisé en ce que** le signal test est la valeur moyenne des signaux caractéristiques de plusieurs objets et que l'écart admissible du signal test par rapport à la valeur de référence (seconde condition) est inférieur à l'écart en vertu duquel, pour un seul objet, la première condition est remplie.

3. Procédé selon la revendication 2, **caractérisé en ce que** les récipients pour lesquels le signal caractéristique ne remplit pas la première condition ne sont pas pris en compte dans l'établissement de la valeur moyenne.

4. Procédé selon l'une des revendications 1 à 3, selon lequel les objets sont des récipients en matériau transparent, l'appareil de contrôle sert à détecter des corps étrangers dans ces récipients et présente une source de lumière ainsi qu'un dispositif de détection, ledit dispositif de détection effectue un balayage point par point d'une image du récipient concerné, détermine la clarté de chaque pixel et, en comparant la clarté des pixels situés à proximité, identifie des transitions clair-sombre et sombre-clair, et le nombre de transitions clair-sombre et sombre-clair qui sont identifiées est utilisé comme critère de présence de corps étrangers et comme signal caractéristique, lequel est comparé à une valeur seuil, la première condition stipulant que le signal caractéristique ne dépasse pas cette valeur seuil, **caractérisé en ce que** le signal test est la valeur moyenne des signaux caractéristiques de plusieurs objets et **en ce que** la seconde condition stipule que le signal test ne s'écarte que d'environ 5 % de la valeur de référence, au-dessus ou au-dessous de cette dernière.

5. Procédé selon la revendication 4, **caractérisé en ce que** la différence de clarté des différentes transitions clair-sombre et sombre-clair est déterminée, que les transitions clair-sombre et sombre-clair qui ont été déterminées sont classées par catégories de contraste, en fonction de la différence de clarté déterminée, que la distribution des transitions clair-sombre et sombre-clair au sein de ces catégories de contraste est contenue dans le signal caractéristique et le signal test et que, lors du contrôle de la seconde condition, cette distribution est prise en compte.

6. Procédé selon la revendication 5, **caractérisé en ce que** la sensibilité du dispositif de détection est ajustée en fonction du contraste mesuré.
